# EUROPEAN PATENT APPLICATION

(11) **EP 2 722 545 A1**
(43) Date of publication of application: **23.04.2014**
(21) Application number: 12306296.0
(22) Date of filing: 19.10.2012
(51) Int. Cl.: F16C 33/78, F16C 19/38, F16J 15/32, F16C 19/54

(54) **Rolling bearing assembly with sealing element**

(71) Applicant: Aktiebolaget SKF, 41 550 Göteborg (SE)
(72) Inventor: Capoldi, Bruno, 89580 CHARENTENAY (FR); Derrer, Siegfried, 91315 HOCHSTADT (DE); Krebs, Matthias, 74080 HEILBRONN (DE)
(74) Representative: Myon, Gérard Jean-Pierre

(57) **Abstract**

This rolling bearing assembly (A) comprises a fixed element (H), a rotatable element (R) and at least one sealing element (6, 7) non-rotatably mounted in a housing (H3, H4) of a first element (H) amongst the fixed and rotatable elements (H, R) and adapted to exert a sliding sealing contact on a surface (82) of the second element (R). The said sealing element (6, 7) is held in said housing (H3, H4 ; H5) by a cover part (H4) of the assembly. The sealing element (6, 7) comprises at least one frustoconical terminal surface (64, 66 ; 74) centred on the longitudinal axis (X6) of said sealing element (6, 7) and adapted to cooperate with at least one corresponding frustoconical surface (30, 44 ; 55) of said housing (H3, H4 ; H5).

## Description

### TECHNICAL FIELD OF THE INVENTION

The invention concerns a rolling bearing assembly.

### BACKGROUND OF THE INVENTION

Rolling bearing assemblies for marine applications usually include relatively large sealing elements mounted in housings in which they are pressed in order to be held in place. These housings generally have surfaces perpendicular to the rotation axis of the assembly.

These rolling bearing assemblies are not satisfying because sealing elements are not correctly held in place a*nd could move slightly out of their housing under severe working conditions.

### SUMMARY OF THE INVENTION

The aim of the invention is to provide a new rolling bearing assembly having a sealing element whose structure improves its sealing efficiency.

To this end, the invention concerns a rolling bearing assembly comprising a fixed element, a rotatable element and at least one sealing element non-rotatably mounted in a housing of a first element amongst the fixed and rotatable elements and adapted to exert a sliding sealing contact on a surface of the second element, said sealing element being held in said housing by a cover part of the assembly. This rolling bearing assembly is **characterized in that** the sealing element comprises at least one frustoconical terminal surface centred on the longitudinal axis of said sealing element and adapted to cooperate with at least one corresponding frustoconical surface of said housing.

Thanks to the invention, the frustoconical terminal contact surfaces of the sealing element and the frustoconical surfaces of the housing improve the liability of the rolling bearing assembly by creating a radial holding force which prevents the sealing element from getting out of its housing.

According to further aspects of the invention which are advantageous but not compulsory, such a rolling bearing assembly may incorporate one or several of the following features:
- The sealing element comprises at least two sealing lips adapted to exert the sliding sealing contact on the surface of the second element.
- The two sealing lips are parallel to each other in transversal section.
- The sealing element comprises at least one lubrication duct passing through its cylindrical wall from its outer peripheral surface to its inner peripheral surface.
- The at least one lubrication duct is located between said at least two sealing lips.
- The sealing element comprises two frustoconical terminal surfaces located at each of its ends along its longitudinal axis, said two frustoconical terminal surfaces being adapted to cooperate with two corresponding frustoconical surfaces of said housing.
- The rolling bearing assembly comprises two sealing elements having each one sealing lip.
- The sealing elements are separated by a spacer belonging to the housing and having at least one frustoconical surface adapted to cooperate with a corresponding frustoconical surface of one of said two sealing elements.
- The rolling bearing assembly belongs to a rotatable propeller supporting structure of a boat.
- The rolling bearing assembly belongs to a drilling machine such as a tunnel boring machine.

### BRIEF DESCRIPTION OF THE DRAWINGS

The invention will now be explained in correspondence with the annexed figures, as an illustrative example. In the annexed figures:
- figure 1 is a side view of a propeller supporting structure to which a rolling bearing assembly according to the invention belongs;
- figure 2 is a sectional view of a rolling bearing assembly according to the invention;
- figure 3 is a view at a larger scale of detail III on figure 2;
- figure 4 is a view similar to figure 2, of a rolling bearing assembly according to a second embodiment of the invention;
- figure 5 is a view at a larger scale of detail V on figure 4.

### DETAILED DESCRIPTION OF SOME EMBODIMENTS

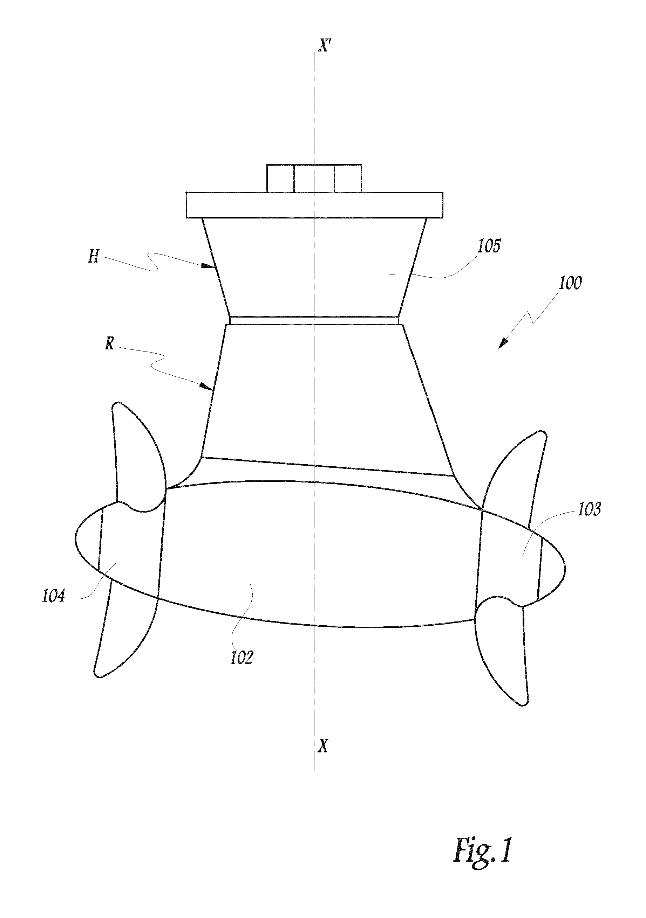

A propeller supporting structure 100 of a boat is represented on figure 1. Supporting structure 100 comprises a motor body 102 and two propellers 103 and 104 arranged at both ends of the motor body 102. Motor body 102 is pivotable with respect to a fixed body 105, which belongs to a non-shown hull of a boat.

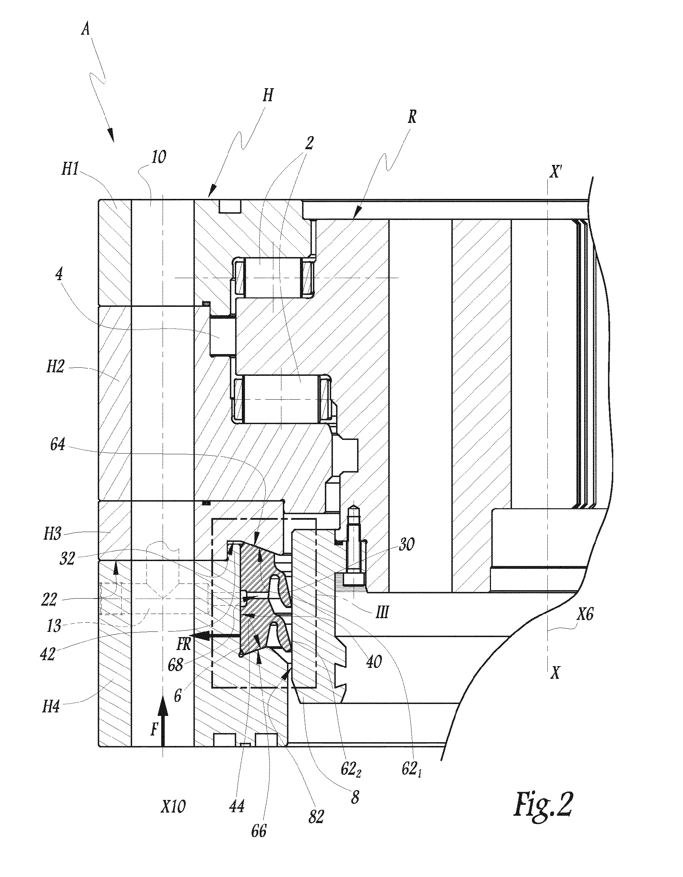

Structure 100 comprises a rolling bearing assembly A represented on figure 2. Rolling bearing assembly A comprises a rotatable element R fast in rotation with motor body 102. Rolling bearing assembly A also comprises a fixed element, which is a housing H fixed with respect to fixed part 105 and in which a portion of rotatable element R is mounted.

Rolling bearing assembly A also comprises rolling bearing systems which permit the rotation of rotatable element R with respect to housing H along a longitudinal rotation axis X-X'. These rolling bearing systems comprise two radial roller bearings 2, comprising rollers which have a rotation axis perpendicular to axis X-X', and one axial roller bearing 4, comprising rollers which have a rotation axis parallel to axis X-X'.

According to a non-shown embodiment of the invention, rolling bearing assembly A may comprise other types of bearing systems, such as ball bearings, needle bearings or plain bearings.

Rolling bearing assembly A also includes a sealing element 6 adapted to prevent lubrication oil, which facilitates rotation of rotatable element R with respect to housing H, from getting outside assembly A, and to prevent exterior elements, such as sea water, from getting inside rolling bearing assembly A and damaging its components. Sealing element 6 is fast in rotation with and mounted in housing H, and rotates with respect to rotatable element R. Sealing element 6 comprises two sealing lips 62₁ and 62₂ which are oriented radially towards axis X-X' and which lay on an outer peripheral surface 82 of a tubular element 8 belonging to rotatable element R. Sealing element 6 defines a longitudinal axis X6 which is superimposed with axis X-X'.

Housing H is made of several parts including a main part H1, a middle part H2 in which radial and axial roller bearings 2 and 4 are mounted, an intermediate washer H3 and a cover H4. Parts H1, H2, H3 and H4 are adapted to be assembled together along axis X-X' thanks to several non-shown bolts, inserted along an axis X10 parallel to axis X-X' in bores, only one bore being represented on figure 2 with reference 10. Bore 10 runs in a longitudinal portion of parts H1, H2, H3 and H4. Intermediate washer H3 is adapted to be mounted on an annular mounting surface 22 of middle part H2. Intermediate washer H3 comprises a mounting surface 30 which has a frustoconical shape centred round axis X-X'. Mounting surface 30 extends towards axis X-X' and is opposed to middle part H2. A corresponding terminal frustoconical surface 64 of sealing element 6 is adapted to make a sealing contact with mounting surface 30 when sealing element 6 is mounted into housing H. In transversal sectional view, surfaces 30 and 64 make an angle β1 with axis X-X'. Angle β1 has preferably a value comprises between 45 and 80 degrees, and preferably around 70 degrees.

Cover H4 comprises an inner cylindrical surface 40 centred around axis X-X'. Inner surface 40 extends along axis X-X' between a collar 42 of cover H4, adapted to be inserted in a cavity 32 of intermediate washer H3, mounting surface 30 forming a surface of cavity 32. Opposite from collar 42, inner surface 40 comprises a frustoconical surface 44, which has a shape similar to frustoconical mounting surface 30 and converges towards axis X-X' in the direction of intermediate washer H3. Frustoconical surfaces 30 and 44 face each other along axis X-X'.

Sealing element 6 is mounted in intermediate washer H3 and cover H4 so that terminal frustoconical surface 64 makes a contact with mounting surface 30, and so that a terminal frustoconical surface 66 of sealing element 6, which is opposed to terminal surface 64 along axis X-X', makes a sealing contact with frustoconical surface 44 of cover H4. In transversal sectional view, surfaces 66 and 44 make an angle β2 with axis X-X'. Angle β2 has preferably a value comprised between 45 and 80 degrees, and preferably around 70 degrees.

Surfaces 30 and 64 on the one hand, and surfaces 66 and 44 on the other hand, are represented as having the same inclination angles β1 and β2 with respect to axis X-X'. According to a non-shown embodiment, angles β1 and β2 can have different values.

An axial force F is exerted by the bolts mounted in bores 10, on cover H4, which holds sealing element 6 in intermediate washer H3. Thanks to the inclination of frustoconical surfaces 30, 44, 64 and 66 with respect to axis X-X', axial force F induces a radial holding force FR which is exerted on sealing element 6. Radial holding force FR is perpendicular to axis X-X' and directed outwardly with respect to axis X-X', so that force FR urges sealing element 6 against surface 40 thus preventing sealing element 6 from getting out of cover H4. This improves liability and tightness of rolling bearing assembly A.

According to an optional feature of the invention, sealing element 6 comprises a lubrication duct 68 passing through the cylindrical wall of sealing element 6 from its outer peripheral surface 6A to its inner peripheral surface 6B. This lubrication duct 68 permits to direct lubrication oil flowing from a duct 13 provided in cover H4 towards a space comprised between peripheral surface 82 and sealing element 6. Lubrication duct 68 is preferably located between sealing lips 62₁ and 62₂.

According to a non-shown embodiment of the invention, only one of terminal surfaces 64 and 66 of sealing element 6 may be frustoconical. In such a case, the one of terminal surfaces 64 and 66 which is not frustoconical is preferably planar and perpendicular to axis X6. The one of surfaces 30 and 44 which cooperates with the non-frustoconical terminal surface of sealing element 6 is also planar and perpendicular to axis X-X'.

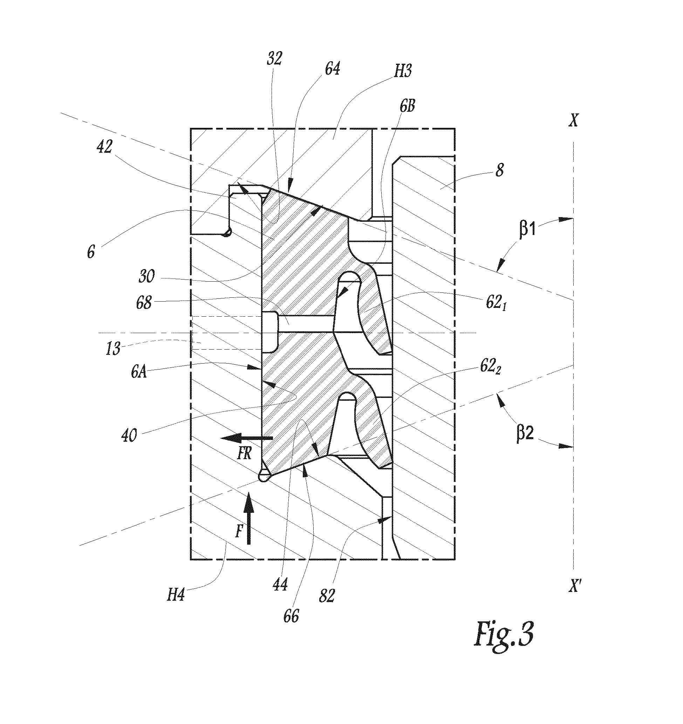

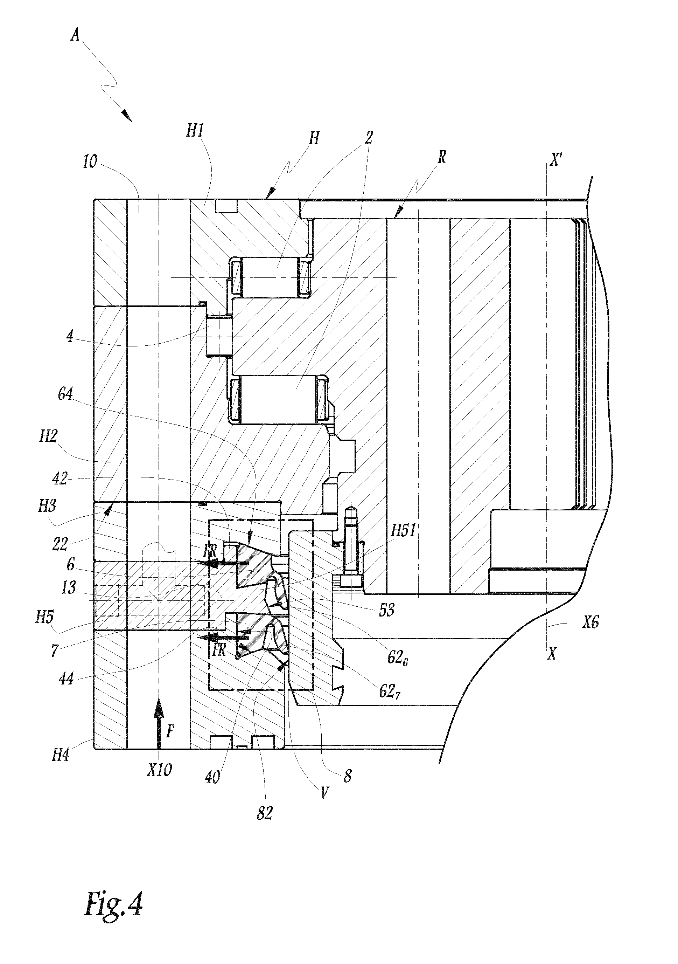

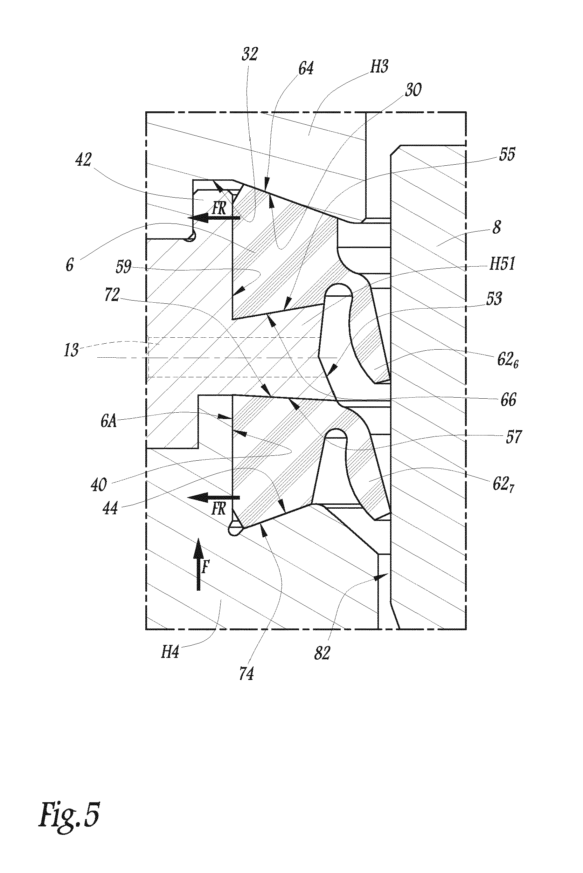

A second embodiment of the invention is represented on figures 4 and 5. In this embodiment, elements similar to the first embodiment have the same references and work in the same way. This embodiment differs from the embodiment of figures 1 to 3 by the fact that rolling bearing assembly A comprises two sealing elements 6 and 7 separated, along axis X-X', by a spacer element H51 belonging to a part H5 of housing H inserted between cover H4 and intermediate washer H3. Each of sealing elements 6 and 7 comprises one sealing lip 62₆, respectively 62₇.

In this embodiment, sealing element 6 includes frustoconical terminal surfaces 64 and 66, while sealing element 7 includes only one frustoconical terminal surface 74. Spacer element H51 comprises an internal cylindrical surface 53 centred around axis X-X'. On its side oriented towards sealing element 6, spacer element H51 comprises a frustoconical surface 55 which has a corresponding shape with frustoconical surface 66 of sealing element 6. Frustoconical surface 44 of cover H4 cooperates with frustoconical surface 74 of sealing element 7.

Sealing element 7 comprises a planar surface 72 perpendicular to axis X-X' and adapted to cooperate with a planar surface 57 of spacer element H51.

In a way similar to the first embodiment, sealing element 7 is urged against surface 40 by radial force FR thanks to the cooperation between frustoconical surfaces 44 and 74.

Force F is transmitted to part H5 by cover H4. The cooperation between, on the one hand, frustoconical surfaces 55 and 66 and, on the other hand, frustoconical surfaces 30 and 64 creates a radial force FR under action of force F. Sealing element 6 is urged against an inner cylindrical surface 59 of part H5 by force FR.

In such a case, sealing elements 6 and 7 do not comprise any lubrication duct 68. Lubricant is brought towards surface 82 through an open end of duct 13 provided on internal surface 53.

According to a non-shown embodiment of the invention, the structure of rolling bearing assembly A may be inverted with respect to the structure of the two previous embodiments. For example, sealing element 6 may be fast in rotation with rotatable element R instead of being fast in rotation with fixed element H.

The features of the embodiments of the invention can be combined within the scope of the invention.

## Claims

1. Rolling bearing assembly (A) comprising a fixed element (H), a rotatable element (R) and at least one sealing element (6, 7) non-rotatably mounted in a housing (H3, H4) of a first element (H) amongst the fixed and rotatable elements (H, R) and adapted to exert a sliding sealing contact on a surface (82) of the second element (R), said sealing element (6, 7) being held in said housing (H3, H4 ; H5) by a cover part (H4) of the assembly, wherein the sealing element (6, 7) comprises at least one frustoconical terminal surface (64, 66 ; 74) centred on the longitudinal axis (X6) of said sealing element (6, 7) and adapted to cooperate with at least one corresponding frustoconical surface (30, 44 ; 55) of said housing (H3, H4 ; H5).

2. Rolling bearing assembly according to claim 1, wherein the sealing element (6) comprises at least two sealing lips (62₁, 62₂) adapted to exert the sliding sealing contact on the surface (82) of the second element (R).

3. Rolling bearing assembly according to claim 2, wherein said two sealing lips (62₁, 62₂) are parallel to each other in transversal section.

4. Rolling bearing assembly according to any preceding claim, wherein the sealing element (6) comprises at least one lubrication duct (68) passing through its cylindrical wall from its outer peripheral surface (70) to its inner peripheral surface (72).

5. Rolling bearing assembly according to one of claims 2 and 3 and to claim 4, wherein said at least one lubrication duct (68) is located between said at least two sealing lips (62).

6. Rolling bearing assembly according to any preceding claim, wherein the sealing element (6) comprises two frustoconical terminal surfaces (64, 66) located at each of its ends along its longitudinal axis (X6), said two frustoconical terminal surfaces (64, 66) being adapted to cooperate with two corresponding frustoconical surfaces (30, 44) of said housing (H3, H4).

7. Rolling bearing assembly according to claim 1, wherein it comprises two sealing elements (6, 7) having each one sealing lip (62₆, 62₇).

8. Rolling bearing assembly according to claim 7, wherein said sealing elements (6, 7) are separated by a spacer (H51) belonging to the housing (H3, H4, H5) and having at least one frustoconical surface (55) adapted to cooperate with a corresponding frustoconical surface (66) of one (6) of said two sealing elements (6, 7).

9. Rolling bearing assembly according to any preceding claims, wherein it belongs to a rotatable propeller supporting structure (100) of a boat.

10. Rolling bearing assembly according to any of claim 1 to 8, wherein it belongs to a drilling machine such as a tunnel boring machine.
